# FASCICULE DE BREVET EUROPEEN

(11) **EP 2 143 580 B1**
(45) Date de publication et mention de la délivrance du brevet: **22.05.2013**
(21) Numéro de dépôt: 09008890.7
(22) Date de dépôt: 08.07.2009
(51) Int. Cl.: B60J 7/16, B60J 7/20

(54) **Dispositif de toit rotatif pour véhicule automobile**
Vorrichtung eines Schwenkdachs für ein Kraftfahrzeug
Device for a rotatable roof for an automotive vehicle

(30) Priorité: 11.07.2008 FR 0803968
(43) Date de publication de la demande: 13.01.2010
(73) Titulaire: Webasto AG, 82131 Stockdorf (DE)
(72) Inventeur: Baudouin, Jacky, 79300 Terves (FR); Lebeau, Jean-Marie, 79140 Le Pin (FR)
(74) Mandataire: Marchand, André

(56) Documents cités:
- EP-A- 1 234 704
- WO-A-2005/095139
- DE-A1- 10 116 710
- DE-A1-102004 021 552

## Description

La présente invention concerne un dispositif de toit rotatif destiné à équiper un véhicule découvrable.

L'invention trouve une application particulièrement avantageuse dans le domaine automobile.

Il existe aujourd'hui quantité de véhicules automobiles disposant d'un toit mobile à même d'être déplacé entre une position couverte dans laquelle il s'étend au dessus de l'habitacle, et une position découverte dans laquelle il prend place au niveau de la partie arrière du véhicule. Parmi ces différents véhicules, on distingue plus particulièrement ceux qui sont dotés d'un toit rotatif, c'est-à-dire d'un pavillon rigide qui est articulé par rapport à un axe transversal situé derrière les sièges, sensiblement à hauteur des appuis-tête, et qui est capable de pivoter sur près de 180° afin de se retourner pour venir se positionner sur l'ouvrant de coffre du véhicule.

En position découverte, un toit rotatif n'étant pas toujours voué à être recouvert par un élément de carrosserie ou un panneau de protection spécifique, il est généralement prévu un système de verrouillage pour immobiliser complètement le pavillon par rapport au coffre. Mais afin que le coffre en question puisse être ouvert ou fermé malgré la présence du pavillon verrouillé sur sa face supérieure, ces deux principaux éléments mobiles du dispositif de toit rotatif sont habituellement montés pivotants par rapport à un même axe.

Ce type d'agencement présente toutefois l'inconvénient d'être relativement fragile étant donné que l'axe commun participe à la fois à la cinématique du pavillon et à celle de l'ouvrant de coffre. Cela implique en effet qu'il doive supporter conjointement la masse du pavillon et celle de l'ouvrant de coffre, mais aussi les efforts résultant des pivotements respectifs de ces deux éléments mobiles.

Un tel dispositif de toit s'avère en outre difficile à intégrer avec précision au niveau de la carrosserie du véhicule. On sait en effet que pour obtenir un résultat optimal, le positionnement du pavillon doit être réalisé par rapport à la traverse supérieure du pare-brise, tandis que celui de l'ouvrant de coffre doit s'effectuer par rapport aux ailes arrières du véhicule. On comprend bien dès lors qu'avec un axe de pivotement commun, il va être particulièrement compliqué de trouver un compromis qui soit satisfaisant esthétiquement parlant.

Le document D1 (WO 2005/095139) décrit un véhicule automobile équipé d'un toit rigide rétractable en plusieurs parties et destiné à venir se stocker dans un logement ouvert ménagé au niveau de l'ouvrant de coffre dudit véhicule. Le toit rétractable et l'ouvrant de coffre peuvent être montés pivotants par rapport à des axes distincts, mais quand ledit toit rétractable repose dessus l'ouvrant de coffre en position découverte l'ouvrant de coffre ne doit pas pouvoir s'ouvrir. L'ouverture du coffre ne peut être envisagée qu'après avoir préalablement relevé verticalement le toit en position repliée.

Aussi, le problème technique à résoudre par l'objet de la présente invention, est de proposer un dispositif de toit rotatif pour un véhicule automobile disposant d'un ouvrant de coffre monté transversalement pivotant entre une position ouverte et une position fermée, ledit dispositif de toit rotatif comprenant un pavillon monté transversalement pivotant entre une position couverte dans laquelle il s'étend au dessus de l'habitacle du véhicule, et une position découverte dans laquelle il est retourné au dessus de l'ouvrant de coffre, dispositif de toit rotatif qui permettrait d'éviter les problèmes de l'état de la technique en offrant notamment une tenue mécanique sensiblement améliorée, ainsi qu'une véritable facilité d'intégration.

La solution au problème technique posé consiste, selon la présente invention, en ce que le pavillon et l'ouvrant de coffre sont montés pivotants par rapport à des axes A, B distincts, et en ce que le dispositif de toit rotatif comporte en outre des moyens aptes à maintenir le pavillon en position découverte quel que soit le degré d'ouverture de l'ouvrant de coffre.

Il est entendu que dans l'ensemble de ce texte, le terme pavillon désigne tout élément sensiblement rigide destiné à s'intégrer au niveau du toit du véhicule, indépendamment de ses dimensions par rapport à celles dudit toit considéré dans son ensemble. Ainsi, il peut s'agir indifféremment d'un élément correspondant intégralement au pavillon d'un véhicule entièrement découvrable, ou d'un élément dont la taille est inférieure à celle du pavillon dans le cas d'un véhicule partiellement découvrable.

Il est par ailleurs bon de préciser que le fait que l'ouvrant de coffre et le pavillon soient montés transversalement pivotant, signifie que chacun d'entre eux est monté mobile en rotation par rapport à un axe qui est sensiblement transversal vis-à-vis du véhicule automobile.

Quoi qu'il en soit, l'invention telle qu'ainsi définie présente l'avantage d'être particulièrement robuste. Le fait que le pavillon et l'ouvrant de coffre soient articulés indépendamment l'un de l'autre, permet en effet de répartir les masses et les efforts sur deux axes différents au lieu de les faire supporter par un axe commun comme dans l'art antérieur. C'est ainsi qu'au final, la tenue mécanique du dispositif de toit rotatif se voit significativement renforcée.

L'utilisation d'axes de pivotement distincts ne doit pas pour autant remettre en cause, ni la nécessité que le pavillon puisse être rendu solidaire de l'ouvrant de coffre lorsqu'il est en position découverte, ni l'obligation que ledit ouvrant de coffre conserve sa mobilité dès lors qu'il supporte effectivement ledit pavillon en position découverte. C'est pourquoi dans le cadre de l'invention, le pavillon est assujetti à l'ouvrant de coffre par l'intermédiaire de moyens de maintien autorisant un certain mouvement relatif entre ces deux éléments mobiles en cas de pivotement simultané.

En ce sens, les moyens de maintien selon l'invention ne peuvent en aucun cas être assimilés aux moyens de verrouillage mis en oeuvre dans les dispositifs de toit rotatif de l'art antérieur. Il n'est en effet ici absolument pas question d'immobiliser de manière absolue le pavillon par rapport à l'ouvrant de coffre. L'objectif est plutôt d'assurer un maintien suffisamment stable pour garantir au pavillon un positionnement sensiblement parallèle et directement à proximité de l'ouvrant de coffre, et ce quelle que soit le degré d'ouverture dudit ouvrant de coffre.

Le fait que le pavillon et l'ouvrant de coffre disposent d'axes de pivotement distincts a également pour avantage de faciliter l'intégration du dispositif de toit rotatif au niveau de la carrosserie du véhicule. Il est en effet possible de régler la position du pavillon indépendamment de celle de l'ouvrant de coffre, ce qui signifie qu'il n'est pas besoin de faire des compromis pour parvenir à un résultat satisfaisant d'un point de vue esthétique. Il suffit simplement d'aligner avec précision le pavillon par rapport à la traverse supérieure du pare-brise, et de positionner l'ouvrant de coffre de manière parfaitement affleurante par rapport aux ailes arrières du véhicule.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
Les figures 1 à 4 illustrent un véhicule automobile doté d'un dispositif de toit rotatif conforme à l'invention.
La figure 1 représente le véhicule automobile avec le dispositif de toit rotatif entièrement fermé.
La figure 2 montre le véhicule automobile avec le dispositif de toit rotatif en début de phase d'ouverture.
La figure 3 fait apparaître le véhicule automobile avec le dispositif de toit rotatif en cours de phase d'ouverture.
La figure 4 est une vue similaire à la figure 3, mais avec le dispositif de toit rotatif complètement ouvert.
La figure 5 présentent en détail les moyens de maintien qui équipent le dispositif de toit rotatif ; lesdits moyens de maintien étant dans un état passif.
La figure 6 constitue une vue similaire à la figure 5, mais avec les moyens de maintien dans un état actif.
Les figures 7 à 15 concernent une série de coupes longitudinales qui illustrent la cinématique du dispositif de toit rotatif.

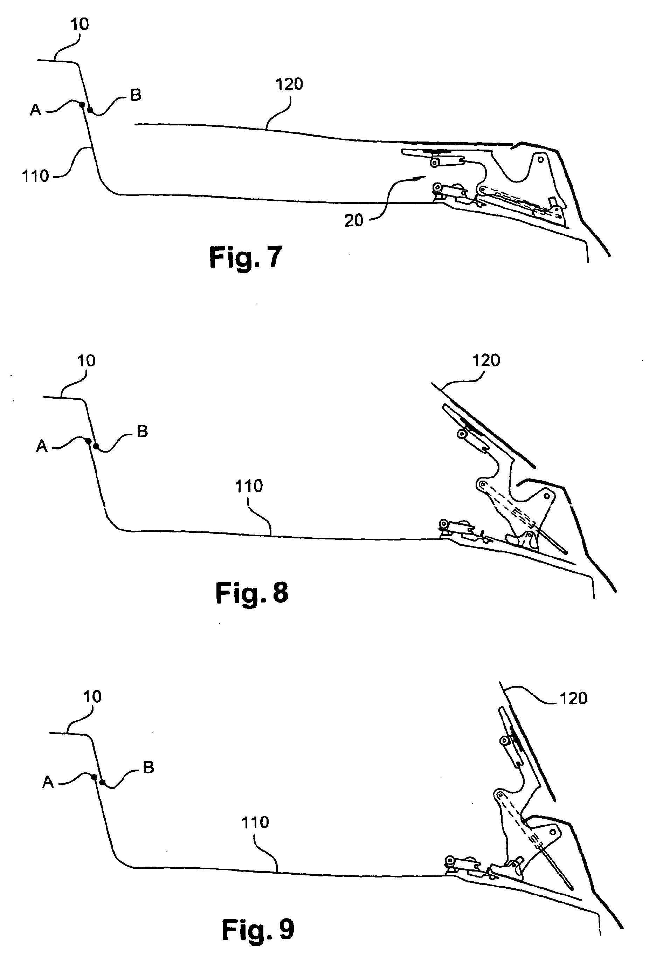

La figure 7 représente le dispositif de toit rotatif en configuration coupé, c'est-à-dire avec le pavillon en position couverte et le couvre pavillon en position de protection.
La figure 8 montre plus particulièrement le couvre pavillon en phase d'ouverture ; le pavillon restant en position couverte.
La figure 9 fait apparaître le couvre pavillon en position déployée.

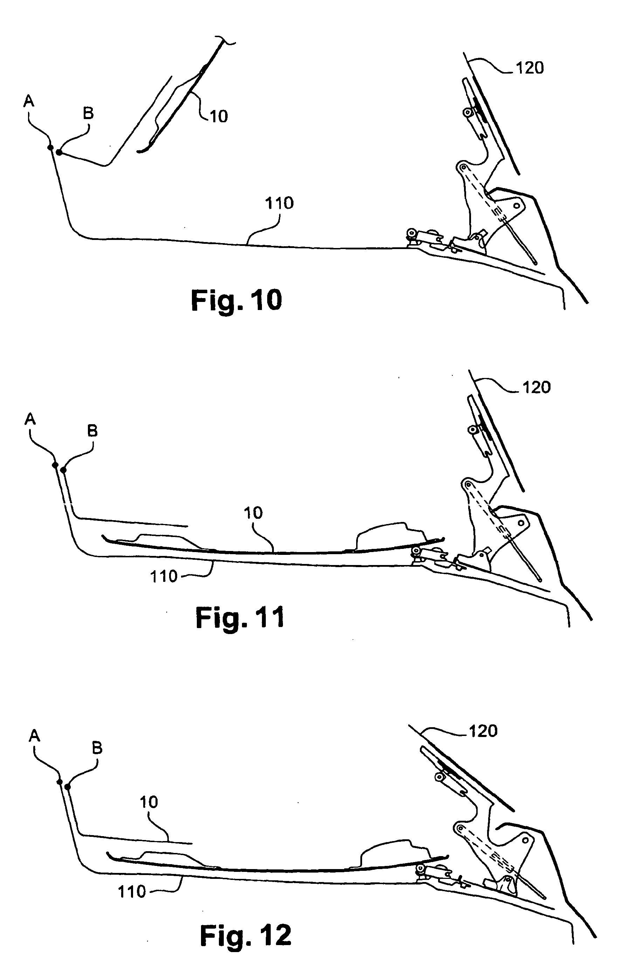

La figure 10 illustre le pavillon en phase retournement ; le couvre pavillon étant toujours en position déployée.
La figure 11 représente le pavillon en position découverte.
La figure 12 montre le couvre pavillon en cours de rabattement au dessus du pavillon en position découverte.

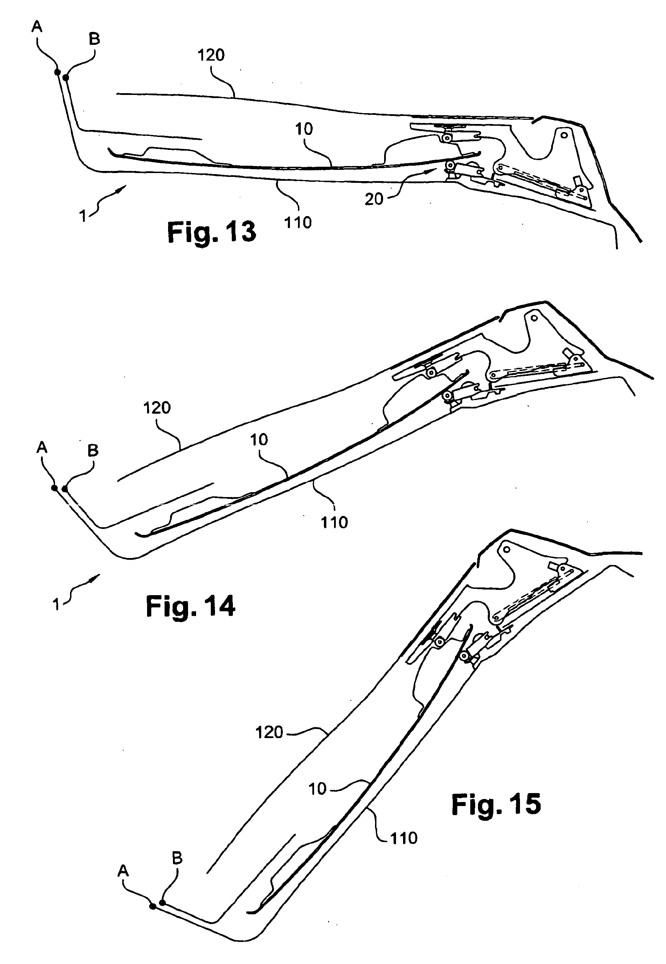

La figure 13 fait apparaître le dispositif de toit rotatif en configuration cabriolet, c'est-à-dire avec le pavillon en position découverte et le couvre pavillon en position de protection ; l'ouvrant de coffre étant en position fermée.
La figure 14 est une vue similaire à la figure 13, mais avec l'ouvrant de coffre en phase d'ouverture.
La figure 15 constitue une vue analogue aux figures 13 et 14, mais avec l'ouvrant de coffre en position ouverte.

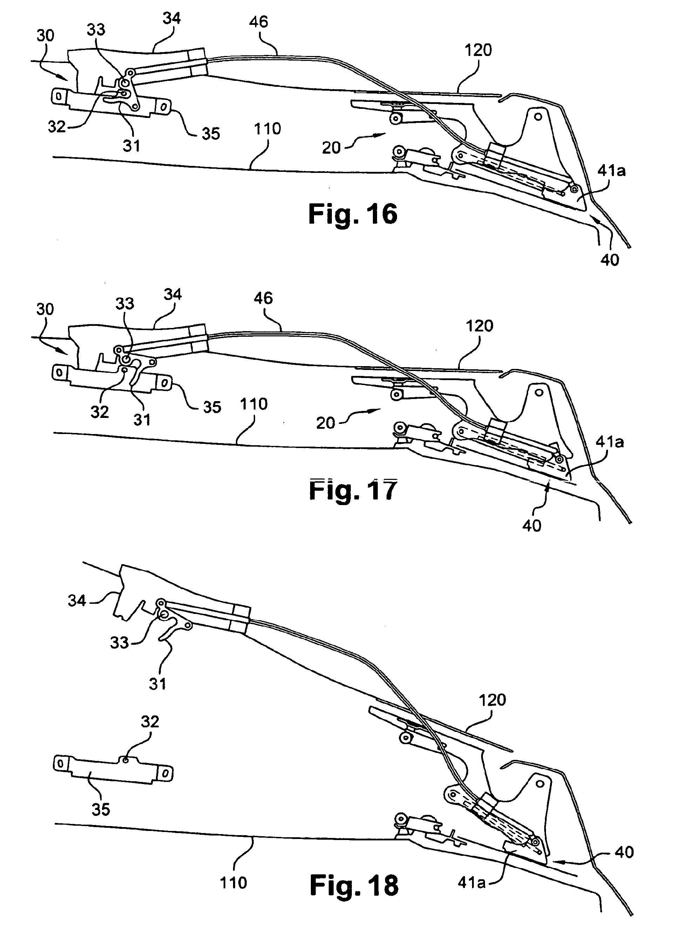

Les figures 16 à 18 illustrent des moyens de verrouillage équipant le dispositif de toit rotatif.
La figure 16 représente les moyens de verrouillage dans un état activé permettant de bloquer le couvre pavillon en position de protection.
La figure 17 montre les moyens de verrouillage dans un état désactivé ; le couvre pavillon étant toujours en position de protection.
La figure 18 est une vue similaire à la figure 17, mais avec le couvre pavillon en pleine phase d'ouverture.

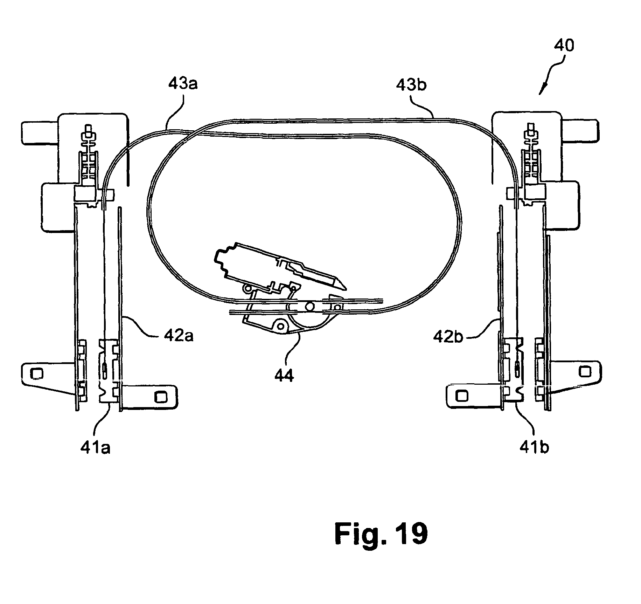

La figure 19 représente des moyens d'entraînement motorisés équipant le dispositif de toit rotatif.
Pour des raisons de clarté, les mêmes éléments ont été désignés par des références identiques. De même, seuls les éléments essentiels pour la compréhension de l'invention ont été représentés, et ceci sans respect de l'échelle et de manière schématique.

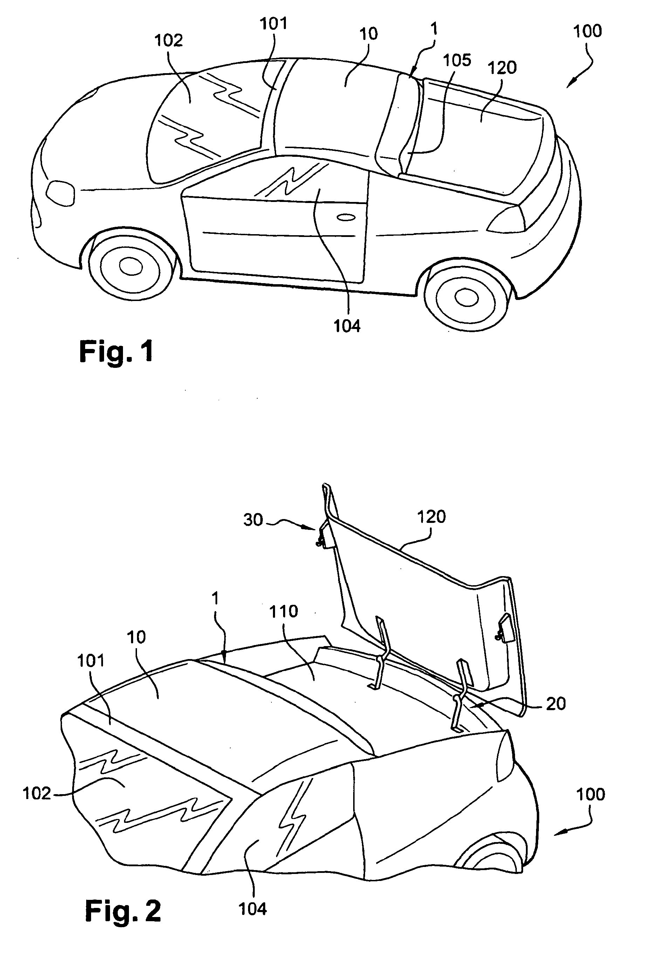

Les figures 1 à 4 illustrent donc un véhicule automobile 100 qui est équipé à la fois d'un ouvrant de coffre 110 et d'un dispositif de toit rotatif 1.

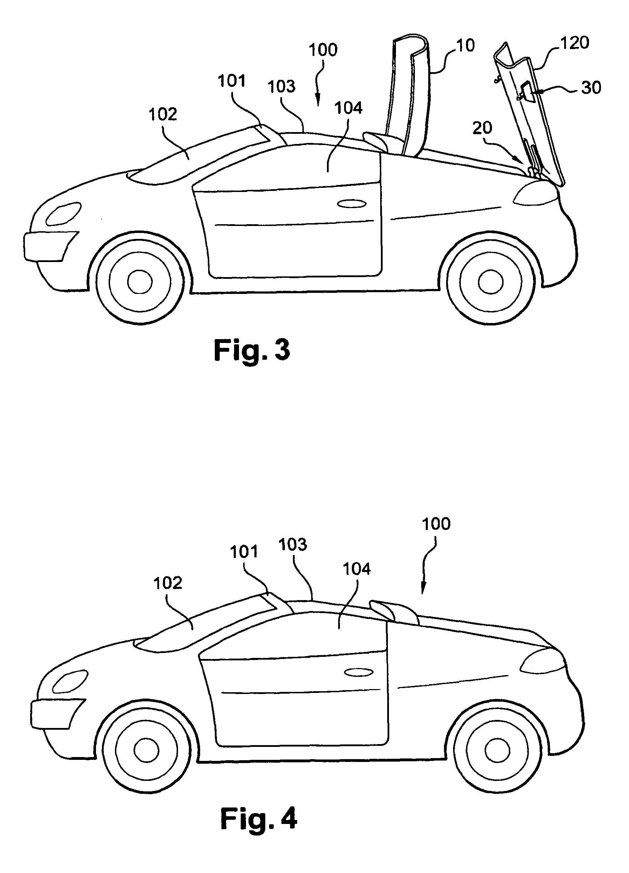

Même si cela n'est pas directement visible sur ces quatre premières représentations, l'ouvrant de coffre 110 est monté de manière classique transversalement pivotant entre une position ouverte et une position fermée. Le dispositif de toit rotatif 1 est pour sa part doté d'un pavillon 10 qui est lui aussi monté transversalement pivotant. Mais cette mobilité s'exerce ici entre une position couverte dans laquelle le pavillon 10 s'étend au dessus de l'habitacle du véhicule 100 (figures 1 et 2), et une position découverte dans laquelle il est retourné au dessus de l'ouvrant de coffre 110 (figure 4).

Conformément à l'objet de la présente invention, le pavillon 10 est monté mobile en pivotement par rapport à un axe B qui est distinct de l'axe de pivotement A de l'ouvrant de coffre 110. Par ailleurs, le dispositif de toit rotatif 1 est en outre pourvu de moyens 20 (figure 3) qui sont capables de maintenir le pavillon 10 en position découverte quel que soit le degré d'ouverture de l'ouvrant de coffre 110.

Dans ce mode particulier de réalisation, choisi uniquement à titre d'exemple, le pavillon 10 constitue l'intégralité du toit du véhicule automobile 100. Il se présente en effet sous la forme d'un panneau rigide qui est implanté de manière affleurante par rapport à la traverse supérieure 101 du pare-brise 102 (figures 1 et 2), et qui surplombe directement les vitres 103, 104 des portes latérales sans montants (figures 3 et 4). On note toutefois que le pavillon 10 est indépendant de la lunette arrière 105 qui est pour sa part montée complètement fixe sur le véhicule 100.

Selon une particularité de l'invention, les moyens de maintien 20 sont à même de bloquer tout déplacement du pavillon 10 suivant une direction sensiblement perpendiculaire au plan de l'ouvrant de coffre 110. Mais ils sont aussi en mesure de guider la translation du pavillon 10 suivant une direction sensiblement parallèle au plan de l'ouvrant de coffre 110, lorsque ledit ouvrant de coffre 110 est déplacé entre sa position fermée et sa position ouverte.

La fonction de maintien assurée par les moyens 20 résulte donc de l'association d'une capacité de blocage et d'une possibilité de mouvement relatif. Cela signifie donc qu'il n'y a à aucun moment verrouillage, mais un simple maintien permettant de conserver solidaires le pavillon 10 et l'ouvrant de coffre 110, même en cas de déplacement simultané de ces deux éléments. Quoi qu'il en soit, il est clair que cette relative liberté de mouvement est totalement indissociable de l'utilisation d'axes de pivotement distincts.

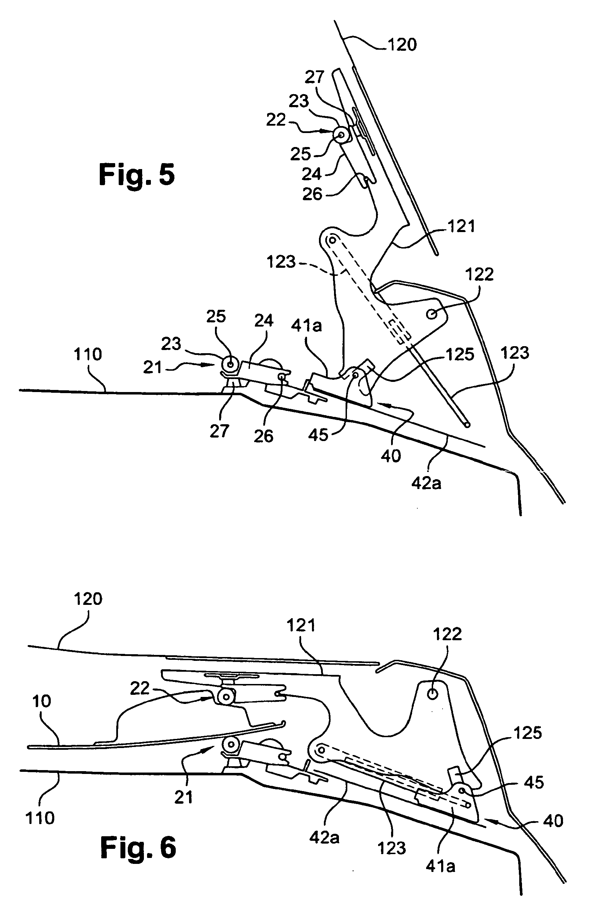

Selon une autre particularité de l'invention, les moyens de maintien 20 comprennent au moins un organe de maintien fixe 21 qui est solidaire de l'ouvrant de coffre 110 et qui est en mesure de soutenir le pavillon 10 en position découverte (figure 6), ainsi qu'au moins un organe de maintien mobile 22 qui est à même d'être déplacé entre une position passive dans laquelle il s'étend à distance du pavillon 10 (figure 5), et une position active dans laquelle il vient pousser ledit pavillon 10 en direction de l'ouvrant de coffre 110 (figure 6).

C'est la combinaison du soutien et de l'appui qui engendre le blocage du pavillon 10 perpendiculairement à l'ouvrant de coffre 110, et c'est l'absence de maintien parallèlement à ce même ouvrant de coffre 110 qui confère une certaine liberté de déplacement audit pavillon 10. Mais c'est surtout l'association de ces deux effets qui permet de générer un maintien compatible avec l'utilisation d'axes de pivotement distincts, en garantissant en permanence au pavillon 10 un positionnement sensiblement parallèle et à proximité directe de l'ouvrant de coffre 110, tout en autorisant une pleine mobilité de l'ensemble.

Ainsi qu'on peut le voir clairement sur les figures 5 et 6, chaque organe de maintien 21, 22 comporte un élément de contact rotatif 23 qui est apte, d'une part, à venir en appui contre le pavillon 10 lorsque l'ouvrant de coffre 110 est immobile, et d'autre part, à rouler sur ledit pavillon 10 lorsque ledit ouvrant de coffre 110 est déplacé entre sa position fermée et sa position ouverte.

Le fait que chaque élément de contact 23 soit monté rotatif permet de limiter les frottements au niveau de l'organe de maintien 21, 22 correspondant, lorsque le pavillon 10 vient à se translater au cours de l'ouverture ou de la fermeture de l'ouvrant de coffre 110.

De manière particulièrement avantageuse, chaque organe de maintien 21, 22 est monté mobile en déplacement, et il dispose de moyens de rappel élastique qui l'entraînent en permanence en direction du pavillon 10 placé en position découverte.

Un tel agencement est destiné à garantir un contact effectif et constant entre chaque organe de maintien 21, 22 et le pavillon 10, en compensant toute variation d'écartement entre ces deux éléments lorsque ledit pavillon 10 vient à se translater au cours de l'ouverture ou de la fermeture de l'ouvrant de coffre 110. Mais ce type de montage a aussi pour fonction d'assurer la tenue aux vibrations du système.

Dans cet exemple de réalisation, chaque élément de contact rotatif 23 est constitué par une roulette en élastomère qui est montée rotative à l'extrémité d'un support 24, autour d'un axe 25. Chaque support 24 est pour sa part monté pivotant par rapport à un axe 26 qui est solidaire de l'ouvrant de coffre 110. Les moyens de rappel élastique, non visibles sur les différentes figures, se présentent quant à eux sous la forme de ressorts cylindriques à action angulaire.

Conformément à une autre caractéristique avantageuse, les moyens de maintien 20 sont dotés de moyens de butée 27 qui sont à même de bloquer le déplacement de chaque organe de maintien 21, 22 dans le sens d'un éloignement par rapport au pavillon 10 placé en position découverte.

De préférence, les moyens de butée 27 sont également en mesure d'amortir le contact avec chaque organe de maintien 21, 22.

Ces caractéristiques permettent de compléter l'action des moyens de rappel élastique lorsqu'un organe de maintien 21, 22 subit un déplacement de trop forte amplitude, en absorbant la majeure partie de l'énergie cinétique correspondante. Dans cet exemple de réalisation, les moyens de butée 27 sont constitués par des plots élastiquement déformables en élastomère.

Selon une autre particularité de l'invention, chaque organe de maintien mobile 22 est positionné sensiblement en regard d'un organe de maintien fixe 22.

En regroupant les organes de maintien 21, 22 par paire, on constitue à chaque fois une sorte de mécanisme à mâchoires, ce qui accroît avantageusement l'efficacité des moyens de maintien 20.

Dans le mode particulier de réalisation qui a été choisi pour illustrer l'invention, le véhicule automobile 100 est doté d'un couvre pavillon 120 qui, comme son nom l'indique, est chargé de protéger le pavillon 10 lorsque celui-ci est en position découverte. Pour cela, le couvre pavillon 120 est monté mobile en déplacement entre une position de protection dans laquelle il recouvre effectivement le pavillon 10 en position découverte, et une position déployée dans laquelle il permet la pleine mobilité dudit pavillon 10. Dans un tel contexte, et conformément à un mode de réalisation actuellement préféré de l'invention, chaque organe de maintien mobile 22 est monté solidaire du couvre pavillon 120.

Il est à noter que dans une telle configuration, la position de protection et la position déployée du couvre pavillon 120 correspondent alors respectivement à la position active et à la position passive de chaque organe de maintien mobile 22.

Ainsi qu'on peut le voir notamment sur les figures 5 et 6, le couvre pavillon 120 de cet exemple de réalisation est monté transversalement pivotant sur le véhicule 100, par l'intermédiaire de deux équerres 121 qui sont articulées par rapport à la partie arrière de l'ouvrant de coffre 110 via des axes de pivotement 122. Un vérin à gaz 123 est par ailleurs fixé entre chaque équerre 121 et l'ouvrant de coffre 110, afin d'assurer une classique fonction de compensation.

Les coupes longitudinales des figures 7 à 15 permettent de bien comprendre la cinématique du dispositif de toit rotatif 1.

Lorsque le véhicule automobile 100 est en configuration coupé conformément à la figure 7, le dispositif de toit rotatif 1 se présente avec le pavillon 10 en position couverte et le couvre pavillon 120 en position de protection ; l'ouvrant de coffre 110 étant en position fermée.

Pour passer à une configuration cabriolet, il est tout d'abord nécessaire que le couvre pavillon 120 commence à se relever ainsi qu'on peut le voir à la figure 8, jusqu'à atteindre sa position déployée représentée à la figure 9.

Le pavillon 10 peut dès lors entamer son retournement conformément à la figure 10, afin de passer de la position couverte (figures 7 à 9) à la position découverte (figure 11).

Le couvre pavillon 120 va ensuite être rabattu comme cela est suggéré à la figure 12, jusqu'à retrouver sa position de protection. Mais à la différence de ce qui apparaît à la figure 7, le couvre pavillon 20 recouvre désormais le pavillon 10 en position découverte conformément à la figure 13. Le véhicule automobile 100 est alors en configuration cabriolet.

Dès lors, l'ouvrant de coffre 110 peut être librement ouvert. La figure 14 illustre d'ailleurs le pivotement simultané du pavillon 10 et de l'ouvrant de coffre 110, entre la position fermée (figures 7 à 13) et la position ouverte (figure 15).

A cet égard, les figures 13 à 15 montrent clairement l'action des moyens de maintien 20 au cours d'un tel déplacement. On observe notamment très précisément que le pivotement simultané du pavillon 10 et de l'ouvrant de coffre 110 suivant des axes distincts A, B, entraîne une légère translation dudit pavillon 10 par rapport audit ouvrant de coffre 110 d'une part, et par rapport au couvre pavillon 120 d'autre part.

Bien évidemment, la fermeture de l'ouvrant de coffre 110 et le passage de la configuration cabriolet à la configuration coupé s'opèrent suivant des cinématiques tout simplement inverses de celles qui viennent d'être décrites.

Selon une autre particularité de l'invention, plus spécialement visible aux figures 16 à 18, le dispositif de toit rotatif 1 est par ailleurs pourvu de moyens de verrouillage 30 qui sont à même de bloquer chaque organe de maintien mobile 22 en position active.

Dans ce mode particulier de réalisation qui est notamment caractérisé par le fait que le véhicule automobile 100 dispose d'un couvre pavillon 120 pour protéger le pavillon 10 en position découverte, les moyens de verrouillage 30 sont en fait en mesure de bloquer la mobilité du couvre pavillon 120.

Concrètement, les moyens de verrouillage 30 comportent au moins un crochet 31 qui est monté pivotant sur le couvre pavillon 120, et qui est apte à coopérer avec une gâche 32 solidaire de la caisse du véhicule 100, lorsque ledit couvre pavillon 120 est en position de protection.

Dans cet exemple de réalisation, les moyens de verrouillage 30 comptent en fait deux crochets 31 qui sont implantés de part et d'autre du couvre pavillon 120 afin de garantir une parfaite immobilisation de ce dernier. Chacun de ces crochets 31 est monté mobile par rapport à un axe de pivotement 33 qui est supporté par une platine support 34 solidaire du couvre pavillon 120. Ce sont bien évidemment deux gâches 32 qui sont associées aux deux crochets 31. Elles se présentent sous la forme de doigt qui sont solidarisées à la caisse du véhicule par l'intermédiaire d'une platine support 35. L'ensemble est agencé de manière à ce que lorsque le couvre pavillon 120 est en position de protection, les crochets 31 puissent pivoter pour venir s'ancrer simultanément autour des gâches 32 (figures 16 et 17).

Selon une autre particularité de l'invention, le dispositif de toit rotatif 1 est en outre doté de moyens d'entraînement motorisés 40 qui sont chargés d'assurer le déplacement de chaque organe de maintien mobile 22 entre la position passive et la position active. Il est à noter que dans le cas précis du mode de réalisation choisi pour illustrer l'invention, cela revient à dire que la mise en oeuvre du couvre pavillon 120 est motorisée.

Conformément à un mode de réalisation actuellement préféré, les moyens d'entraînement motorisés 40 comportent deux chariots d'entraînement 41a, 41b qui sont montés coulissants le long de deux rails de guidage 42a, 42b, et qui sont à même d'être déplacés via deux câbles 43a, 43b par un moteur électrique 44. L'ensemble est agencé de manière à ce que le coulissement des chariots 41a, 41b le long des rails de guidage 42a, 42b entraîne le déplacement de chaque organe de maintien mobile 22 entre la position active et la position passive, c'est-à-dire dans le cas présent le pivotement du couvre pavillon 120 entre la position de protection et la position déployée.

Il est important de préciser ici qu'il est parfaitement envisageable de n'utiliser qu'un seul chariot d'entraînement 41a, 41b associé à un rail de guidage 42a, 42b, et couplé au moteur électrique 44 via un câble 43a, 43b.

Les figures 5 à 18 permettent de comprendre la cinématique générée par les moyens d'entraînement motorisés 40.

En ce qui concerne plus particulièrement la phase d'ouverture du couvre pavillon 120, on observe que dès lors que le moteur électrique 44 va tirer sur les câbles 43a, 43b, les chariots d'entraînement 41a, 41b vont se translater vers l'avant le long de leurs rails de guidage 42a, 42b. Ainsi qu'on peut le voir notamment sur les figures 5 et 6, un doigt 45 porté par chaque chariot d'entraînement 41a, 41b va alors progressivement s'engager dans une encoche 125 ménagée de manière appropriée à travers l'équerre 121 correspondante. Une fois chaque doigt 45 en butée contre la portion de l'équerre qui délimite l'encoche 125, la translation des chariots 41a, 41b va entraîner la mise en rotation concomitante des équerres 121, et par là même le pivotement vers le haut du couvre pavillon 120.

Fort logiquement, la phase de fermeture du couvre pavillon 120 s'opère suivant la cinématique inverse.

De manière particulièrement avantageuse, les moyens d'entraînement motorisés 40 sont en outre en mesure de commander la mise en oeuvre des moyens de verrouillage 30.

Dans cet exemple de réalisation, cette caractéristique est rendue possible par la présence de deux câbles 46 qui relient respectivement chaque chariot d'entraînement 41a, 41b à un des crochets pivotants 31, conformément aux figures 16 à 18.

Bien entendu, l'invention concerne plus généralement tout véhicule automobile 100 comportant un ouvrant de coffre 110 monté transversalement pivotant, ainsi qu'un dispositif de toit rotatif 1 tel que précédemment décrit.

## Revendications

1. Dispositif de toit rotatif (1) pour un véhicule automobile (100) disposant d'un ouvrant de coffre (110) monté transversalement pivotant entre une position ouverte et une position fermée, ledit dispositif de toit rotatif (1) comprenant un pavillon (10) monté transversalement pivotant entre une position couverte dans laquelle il s'étend au dessus de l'habitacle du véhicule (100), et une position découverte dans laquelle il est retourné au dessus de l'ouvrant de coffre (110), où le pavillon (10) et l'ouvrant de coffre (110) sont montés pivotants par rapport à des axes (A, B) distincts, **caractérisé en ce que** le dispositif de toit rotatif (1) comporte en outre des moyens de maintien (20) aptes à bloquer tout déplacement du pavillon (10) perpendiculairement à l'ouvrant de coffre (110), et à guider le pavillon (10) en translation parallèlement à l'ouvrant de coffre (110) lorsque ce dernier est déplacé entre la position fermée et la position ouverte, de telle que le pavillon (10) peut être maintenu en position découverte quel que soit le degré d'ouverture de l'ouvrant de coffre (110).

2. Dispositif de toit rotatif (1) selon la revendication 1, **caractérisé en ce que** les moyens de maintien (20) comportent au moins un organe de maintien fixe (21) qui est solidaire de l'ouvrant de coffre (110) et qui est apte à soutenir le pavillon (10) en position découverte, ainsi qu'au moins un organe de maintien mobile (22) qui est apte à être déplacé entre une position passive dans laquelle il s'étend à distance du pavillon (10), et une position active dans laquelle il vient pousser ledit pavillon (10) en direction de l'ouvrant de coffre (110)

3. Dispositif de toit rotatif (1) selon la revendication 2, **caractérisé en ce que** chaque organe de maintien (21, 22) comporte un élément de contact rotatif (23) qui est apte, d'une part, à venir en appui contre le pavillon (10) lorsque l'ouvrant de coffre (110) est immobile, et d'autre part, à rouler sur ledit pavillon (10) lorsque ledit ouvrant de coffre (110) est déplacé entre sa position fermée et sa position ouverte.

4. Dispositif de toit rotatif (1) selon l'une des revendications 2 ou 3, **caractérisé en ce que** chaque organe de maintien (21, 22) est monté mobile en déplacement, et comporte des moyens de rappel élastique l'entraînant en permanence en direction du pavillon (10) placé en position découverte.

5. Dispositif de toit rotatif (1) selon l'une quelconque des revendications 2 à 4, **caractérisé en ce que** les moyens de maintien (20) comportent des moyens de butée (27) aptes à bloquer le déplacement de chaque organe de maintien (21, 22) dans le sens d'un éloignement par rapport au pavillon (10) placé en position découverte.

6. Dispositif de toit rotatif (1) selon la revendication 5, **caractérisé en ce que** les moyens de butée (27) sont aptes à amortir le contact avec chaque organe de maintien (21, 22).

7. Dispositif de toit rotatif (1) selon l'une quelconque des revendications 2 à 6, **caractérisé en ce que** chaque organe de maintien mobile (22) est positionné sensiblement en regard d'un organe de maintien fixe (21).

8. Dispositif de toit rotatif (1) selon l'une quelconque des revendications 2 à 7, **caractérisé en ce qu'**il comporte des moyens de verrouillage (30) aptes à bloquer chaque organe de maintien mobile (22) en position active.

9. Dispositif de toit rotatif (1) selon l'une quelconque des revendications 2 à 8, **caractérisé en ce que** le véhicule automobile (100) comportant en outre un couvre pavillon (120) monté mobile en déplacement entre une position de protection dans laquelle il recouvre le pavillon (10) en position découverte, et une position déployée dans laquelle il permet la mobilité dudit pavillon (10), chaque organe de maintien mobile (22) est monté solidaire du couvre pavillon (120).

10. Dispositif de toit rotatif (1) selon les revendications 8 et 9, **caractérisé en ce que** les moyens de verrouillage (30) sont aptes à bloquer la mobilité du couvre pavillon (120).

11. Dispositif de toit rotatif (1) selon l'une quelconque des revendications 8 à 10, **caractérisé en ce que** les moyens de verrouillage (30) comportent au moins un crochet (31) qui est monté pivotant sur le couvre pavillon (120), et qui est apte à coopérer avec un gâche (32) solidaire de la caisse du véhicule (100) lorsque ledit couvre pavillon (120) est en position de protection.

12. Dispositif de toit rotatif (1) selon l'une quelconque des revendications 2 à 11, **caractérisé en ce qu'**il comporte des moyens d'entraînement motorisés (40) aptes à entraîner en déplacement chaque organe de maintien mobile (22) entre la position passive et la position active.

13. Dispositif de toit rotatif (1) selon la revendication 12, **caractérisé en ce que** les moyens d'entraînement motorisés (40) comportent au moins un chariot d'entraînement (41a, 41b) qui est monté coulissant le long d'un rail de guidage (42a, 42b) et qui est à même d'être déplacé via un câble (43a, 43b) par un moteur électrique (44), et **en ce que** le coulissement de chaque chariot d'entraînement (41a, 41b) le long de son rail de guidage (42a, 42b) est apte à commander le déplacement de chaque organe de maintien mobile (22) entre la position active et la position passive.

14. Dispositif de toit rotatif (1) selon l'une des revendications 12 ou 13, **caractérisé en ce que** les moyens d'entraînement motorisés (40) sont en outre aptes à commander la mise en oeuvre des moyens de verrouillage (30).

15. Véhicule automobile (100) disposant d'un ouvrant de coffre (110) monté transversalement pivotant, **caractérisé en ce qu'**il comporte en outre un dispositif de toit rotatif (1) selon l'une quelconque des revendications précédentes.

## Patentansprüche

1. Schwenkdachvorrichtung (1) für ein Kraftfahrzeug (100), das einen in Querrichtung zwischen einer offenen Position und einer geschlossenen Position schwenkbar montierten Kofferraumflügel (110) umfasst, die genannte Schwenkdachvorrichtung (1) umfassend ein Dach (10), das in Querrichtung schwenkbar montiert ist, und zwar zwischen einer bedeckten Position, in der es sich über der Fahrgastzelle des Kraftfahrzeugs (100) erstreckt, und einer abgedeckten Position, in der es auf den Kofferraumflügel (110) umgeklappt ist, wo das Dach (10) und der Kofferraumflügel (110) in Bezug auf unterschiedliche Achsen (A, B) schwenkbar montiert sind, **dadurch gekennzeichnet, dass** die Schwenkdachvorrichtung (1) darüber hinaus Haltemittel (20) umfasst, die geeignet sind, jede Bewegung des Dachs (10) senkrecht zum Kofferraumflügel (110) zu blockieren und das Dach (10) parallel zum Kofferraumflügel (110), wenn dieser zwischen der geschlossenen Position und der offenen Position verschwenkt wird, translatorisch so zu führen, dass das Dach (10) unabhängig vom Öffnungsgrad des Kofferraumflügels (110) in abgedeckter Position gehalten werden kann.

2. Schwenkdachvorrichtung (1) nach Anspruch 1, **dadurch gekennzeichnet, dass** die Haltemittel (20) wenigstens ein feststehendes Halteteil (21) umfassen, das mit dem Kofferraumflügel (110) fest verbunden und geeignet ist, das Dach (10) in abgedeckter Position zu stützen, sowie wenigstens ein bewegliches Halteteil (22), das geeignet ist, zwischen einer passiven Position, in der es sich im Abstand vom Dach (10) erstreckt, und einer aktiven Position, in der es das genannte Dach (10) in Richtung auf den Kofferraumflügel (110) schiebt, verschoben zu werden.

3. Schwenkdachvorrichtung (1) nach Anspruch 2, **dadurch gekennzeichnet, dass** jedes Halteteil (21, 22) ein Drehkontaktelement (23) umfasst, das geeignet ist, sich einerseits auf dem Dach (10) abzustützen, wenn der Kofferraumflügel (110) nicht bewegt wird und anderseits auf das genannte Dach (10) zu rollen, wenn der genannte Kofferraumflügel (110) zwischen seiner geschlossenen Position und seiner offenen Position verschwenkt wird.

4. Schwenkdachvorrichtung (1) nach einem der Ansprüche 2 oder 3, **dadurch gekennzeichnet, dass** jedes Halteteil (21, 22) verschiebbar montiert ist und elastische Rückstellmittel umfasst, die es permanent in Richtung auf das in abgedeckter Position stehende Dach (10) treiben.

5. Schwenkdachvorrichtung (1) nach irgendeinem der Ansprüche 2 bis 4, **dadurch gekennzeichnet, dass** die Haltemittel (20) Anschlagmittel (27) umfassen, die geeignet sind, die Verschiebung jedes Halteteils (21, 22) in einer sich von dem in abgedeckter Position stehenden Dach (10) entfernenden Richtung zu blockieren.

6. Schwenkdachvorrichtung (1) nach Anspruch 5, **dadurch gekennzeichnet, dass** die Anschlagmittel (27) geeignet sind, den Kontakt mit jedem Halteteil (21, 22) zu dämpfen.

7. Schwenkdachvorrichtung (1) nach irgendeinem der Ansprüche 2 bis 6, **dadurch gekennzeichnet, dass** jedes bewegliche Halteteil (22) im Wesentlichen gegenüber einem feststehenden Halteteil (21) positioniert ist.

8. Schwenkdachvorrichtung (1) nach irgendeinem der Ansprüche 2 bis 7, **dadurch gekennzeichnet, dass** sie Verriegelungsmittel (30) umfasst, die geeignet sind, jedes bewegliche Halteteil (22) in aktiver Position zu blockieren.

9. Schwenkdachvorrichtung (1) nach irgendeinem der Ansprüche 2 bis 8, **dadurch gekennzeichnet, dass** das Kraftfahrzeug (100) darüber hinaus eine Dachabdeckung (120) umfasst, die verschiebbar montiert ist, und zwar zwischen einer Schutzposition, in der sie das Dach (10) in abgedeckter Position bedeckt, und einer ausgefahrenen Position, in der sie die Beweglichkeit des genannten Dachs (10) ermöglicht, wobei jedes bewegliche Halteteil (22) auf der Dachabdeckung (120) fest montiert ist.

10. Schwenkdachvorrichtung (1) nach den Ansprüchen 8 und 9, **dadurch gekennzeichnet, dass** die Verriegelungsmittel (30) geeignet sind, die Beweglichkeit der Dachabdeckung (120) zu blockieren.

11. Schwenkdachvorrichtung (1) nach irgendeinem der Ansprüche 8 bis 10, **dadurch gekennzeichnet, dass** die Verriegelungsmittel (30) wenigstens einen Haken (31) umfassen, der schwenkbar auf der Dachabdeckung (120) montiert und geeignet ist, mit einem Schließkeil (32), der mit der Karosserie des Kraftfahrzeugs (100) fest verbunden ist, zusammenzuwirken, wenn die genannte Dachabdeckung (120) sich in der Schutzposition befindet.

12. Schwenkdachvorrichtung (1) nach irgendeinem der Ansprüche 2 bis 11, **dadurch gekennzeichnet, dass** sie Motorantriebsmittel (40) umfasst, die geeignet sind, jedes bewegliche Halteteil (22) zwischen der passiven Position und der aktiven Position verschiebend anzutreiben.

13. Schwenkdachvorrichtung (1) nach Anspruch 12, **dadurch gekennzeichnet, dass** die Motorantriebsmittel (40) wenigstens einen Antriebswagen (41a, 41b) umfassen, der entlang einer Führungsschiene (42a, 42b) gleitend montiert ist, und der über ein Kabel (43a, 43b) durch einen Elektromotor (44) verfahrbar ist, und dass das Gleiten jedes Antriebswagens (41a, 41b) entlang seiner Führungsschiene (42a, 42b) geeignet ist, die Verschiebung jedes beweglichen Halteteils (22) zwischen der aktiven Position und der passiven Position zu steuern.

14. Schwenkdachvorrichtung (1) nach einem der Ansprüche 12 oder 13, **dadurch gekennzeichnet, dass** die Motorantriebsmittel (40) darüber hinaus geeignet sind, den Einsatz der Verriegelungsmittel (30) zu steuern.

15. Kraftfahrzeug (100) mit einem in Querrichtung schwenkbar montierten Kofferraumflügel (110), **dadurch gekennzeichnet, dass** es darüber hinaus eine Schwenkdachvorrichtung (1) nach irgendeinem der vorhergehenden Ansprüche umfasst.

## Claims

1. A rotating roof device (1) for a motor vehicle (100) having a trunk lid (110) transversally mounted to pivot between an open position and a closed position, the said rotating roof device (1) comprising a body roof (10) transversally mounted to pivot between a covered position in which it extends over the passenger compartment of the vehicle (100), and an uncovered position in which it is turned back above the trunk lid (110), where the body roof (10) and the trunk lid (110) are pivotably mounted in relation to distinct axes (A, B), **characterized in that** the rotating roof device (1) further comprises holding means (20) capable of preventing any displacement of the body roof (10) perpendicularly to the trunk lid (110), and of translationally guiding the body roof (10) parallel to the trunk lid (110) when the latter is displaced between the closed position and the open position, such that the body roof (10) can be maintained in uncovered position whatever the degree of opening of the trunk lid (110).

2. Rotating roof device (1) according to claim 1, **characterized in that** the holding means (20) comprise at least one fixed holding unit (21) that is secured to the trunk lid (110) and that is capable of supporting the body roof (10) in uncovered position, and at least one mobile holding unit (22) that is capable of being displaced between a passive position in which it extends away from the body roof (10), and an active position in which it pushes the said body roof (10) towards the trunk lid (110).

3. Rotating roof device (1) according to claim 2, **characterized in that** each holding unit (21, 22) comprises a rotating contact element (23) that is capable, firstly, of pressing on the body roof (10) when the trunk lid (110) is motionless, and secondly, of rolling on the said body roof (10) when the said trunk lid (110) is displaced between its closed position and its open position.

4. Rotating roof device (1) according to one of claims 2 or 3, **characterized in that** each holding unit (21, 22) is movably mounted, and comprises elastic recall means driving it continuously towards the body roof (10) placed in uncovered position.

5. Rotating roof device (1) according to any one of claims 2 to 4, **characterized in that** the holding means (20) have stopping means (27) capable of preventing the displacement of each holding unit (21, 22) in the direction moving away from the body roof (10) placed in uncovered position.

6. Rotating roof device (1) according to claim 5, **characterized in that** the stopping means (27) are capable of absorbing the contact with each holding unit (21, 22).

7. Rotating roof device (1) according to any one of claims 2 to 6, **characterized in that** each mobile holding unit (22) is positioned substantially opposite a fixed holding unit (21).

8. Rotating roof device (1) according to any one of claims 2 to 7, **characterized in that** it comprises locking means (30) capable of locking each mobile holding unit (22) in active position.

9. Rotating roof device (1) according to any one of claims 2 to 8, **characterized in that** the motor vehicle (100) further comprises a body roof cover (120) mounted so as to move between a protection position in which it covers the body roof (10) in uncovered position, and an extended position in which it enables the mobility of the said body roof (10), each mobile holding unit (22) being fixedly mounted on the body roof cover (120).

10. Rotating roof device (1) according to claims 8 and 9, **characterized in that** the locking means (30) are capable of preventing the mobility of the body roof cover (120).

11. Rotating roof device (1) according to any one of claims 8 to 10, **characterized in that** the locking means (30) comprise at least one hook (31) that is pivotably mounted on the body roof cover (120), and that is capable of cooperating with a key (32) secured to the body of the vehicle (100) when the said body roof cover (120) is in protection position.

12. Rotating roof device (1) according to any one of claims 2 to 11, **characterized in that** it comprises motorized driving means (40) capable of driving each mobile holding unit (22) to be displaced between the passive position and the active position.

13. Rotating roof device (1) according to claim 12, **characterized in that** the motorized driving means (40) have at least one drive carriage (41a, 41b) slidably mounted along a guide rail (42a, 42b) and which can be displaced via a cable (43a, 43b) by an electric motor (44), and **in that** the sliding of each drive carriage (41a, 41b) along its guide rail (42a, 42b) is capable of controlling the displacement of each mobile holding unit (22) between the active position and the passive position.

14. Rotating roof device (1) according to one of claims 12 or 13, **characterized in that** the motorized driving means (40) are further capable of controlling the implementation of the locking means (30).

15. A motor vehicle (100) having a trunk lid (110) transversally mounted to pivot, **characterized in that** it further comprises a rotating roof device (1) according to any one of the previous claims.
